# EUROPEAN PATENT APPLICATION

(11) **EP 1 221 760 A2**
(43) Date of publication of application: **10.07.2002**
(21) Application number: 01310959.0
(22) Date of filing: 31.12.2001
(51) Int. Cl.: H02M 3/07

(54) **Voltage combiner circuit for electrical loads**

(30) Priority: 05.01.2001 US 755469
(71) Applicant: Nokia Corporation, 02150 Espoo (FI)
(72) Inventor: Nurmi, Mikko, 25130 Muurla (FI)
(74) Representative: Walaski, Jan Filip

(57) **Abstract**

A voltage combiner circuit is created with a first voltage source and a second voltage source a capacitor and a diode. The circuit employs two switches with one switch open while the other is closed thereby defining first and second half cycles of operation for the combiner circuit. The circuit employs a flying capacitor coupled in series with ground, a diode and a second voltage source to charge the capacitor to the level of the second voltage source during the first half cycle of operation. The circuit employs the second switch to couple the flying capacitor charged to the level of the second voltage source in series with the first voltage source creating a voltage level above a threshold voltage level required to turn the load ON.

## Description

### BACKGROUND OF THE INVENTION

### 1. Field of the Invention

This invention relates to novel and improved voltage combiner circuits and methods for driving electrical loads within environments where the available voltage source applied to an electrical load is inadequate to operate the electrical load. Voltage combiner circuits are also known as voltage adder circuits, voltage booster circuits and as charge pumps.

This disclosure is directed to boosting the output voltage available to a given electrical load that is coupled to an inadequate input voltage source. Likely examples of inadequate input voltage sources include, for example: (1) a hardwired 60 Hz 110 AC voltage source; (2) a hardwired DC voltage source; or (3) a battery voltage source such as a lithium-ion battery.

To illustrate the need for a combiner circuit and the operation thereof, consider the following example. A lithium-ion battery provides a Vcc voltage to meet the needs of a hand held radiophone but the Vcc voltage is inadequate to turn ON a white light emitting diode (LED or LEDs). The LED, for example, is used to backlight a display or to inform a user of the availability of some radiophone feature. However, the input voltage Vcc is not adequate to turn ON one or more LED because the forward bias threshold voltage (Vf) of the LED is higher than the battery voltage Vcc. A combiner circuit overcomes this problem by creating a voltage that is higher than the Vf threshold voltage and therefore is able to turn ON the LED, or other load.

### SUMMARY

The present disclosure includes combiner circuit methods for boosting a first input voltage (Vcc1) from a voltage level below, to a voltage level above, a threshold voltage (Vf) required to turn ON an electrical load. The method includes charging a flying capacitor during a first half cycle of circuit operation to the level of a second input voltage (Vcc2). The charging path extends from an input terminal through a diode to an output terminal for coupling to a load. The charged flying capacitor is coupled in series with the first input voltage Vcc1 during a second half cycle of circuit operation to create a voltage level that is the sum of the two input voltages Vcc1 plus Vcc2. The combined voltages are able to turn ON the load. Specifically, the method includes the steps of selecting the voltage levels of Vcc1 and Vcc2 such that their sum (Vcc1 plus Vcc2) is greater than Vf and that Vcc2 is less than Vf. Also, the method further includes deducting from the sum of Vcc1 plus Vcc2 a voltage drop across the diode (Vdiode) while it is forward biased. The diode is back biased once the output voltage rises above the Vf threshold voltage of the load.

The present voltage combiner circuit carries out the method of combining two voltages to turn ON a load. The circuit boosts a first input voltage Vcc1 by adding it to a second input voltage Vcc2.

During a first cycle of operation of the combiner circuit, a flying capacitor is coupled at a first node to a diode that in turn is coupled to the second Vcc2 input voltage. A second node of the capacitor is coupled to an electrical ground through a first switch thereby charging the flying capacitor to the Vcc2 voltage level.

During a second half cycle of circuit operation, the second switch couples the input voltage Vcc1 in series with the flying capacitor at the second node, previously coupled to the electrical ground through the first switch. The algebraic sum of the Vcc1 plus the Vcc2 voltages raises the voltage across the load above the level of the threshold voltage Vf to turn ON the load.

The relationship of the voltages employed in the circuit is expressed in the following equation: the sum of Vcc1 plus Vcc2 is greater than the threshold voltage Vf. An alternative expression for the output voltage is: the sum of Vcc1 plus Vcc2 minus Vdiode (the drop across the diode) is greater than Vf. Also, Vcc2 is less than Vf.

A special case of the present combiner circuit is a circuit in which one or more diode is coupled in parallel with the first diode, one or more flying capacitor is coupled in parallel with the first flying capacitor and one or more electrical load is coupled in parallel with the first load.

Yet another embodiment of the present combiner circuit is the combination of the present circuit within a radiophone wherein the load is a LED or plural LEDs.

### DESCRIPTION OF THE DRAWINGS

The foregoing aspects and other features of the present invention are explained in the following description, taken in connection with the accompanying drawings, wherein:
Fig. 1 is an example of a prior art combiner circuit that employs four switches, and two capacitors to create a voltage across an electrical load that is higher than the input voltage to the circuit.
Fig. 2 is a first embodiment of a novel and improved combiner circuit having elements including two switches, one capacitor and a diode that together with first and second input voltages create a voltage across an electrical load that is higher than a the threshold voltage required to turn ON the load.
Fig. 3 is an embodiment of the combiner circuit of Fig. 2 further that provides a boosted voltage level to multiple electrical loads.

### DESCRIPTION OF EMBODIMENTS

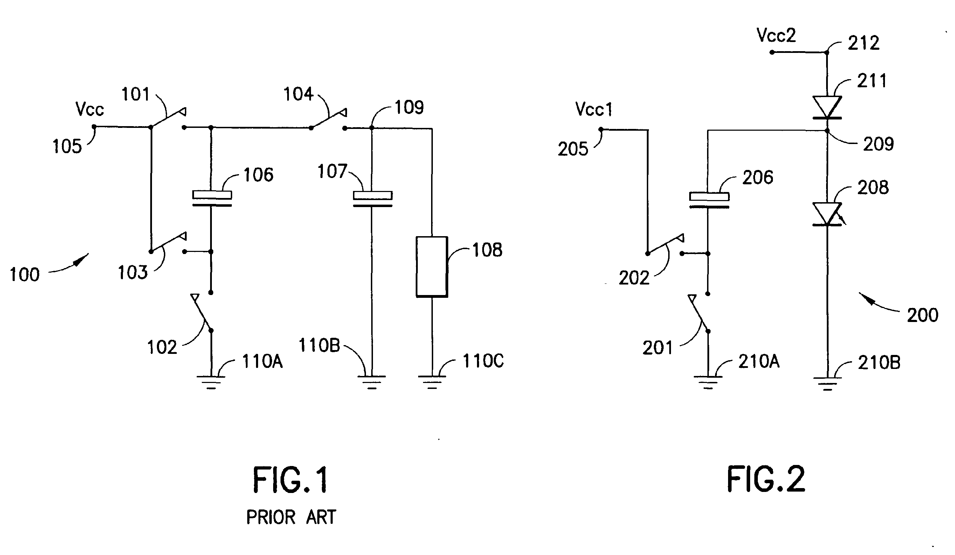

The prior art combiner circuit 100 of Fig. 1 operates by simultaneously closing switches 101 and 102 and opening switches 103 and 104 during a first half cycle of operation of the circuit and by simultaneously closing switches 101 and 102 and opening switches 103 and 104 during a second half cycle of operation of circuit 100.

During the first half cycle of operation of circuit 100, the closed switches 101 and 102 create a first series circuit that charges flying capacitor 106 to a voltage level of, or near, the input voltage Vcc. The series circuit comprises closed switch 101, flying capacitor 106 and closed switch 102. The first charging circuit begins at input terminal 105, the source of input voltage Vcc, and ends at a ground potential 110A.

During the second half cycle of operation of circuit 100, the closed switches 103 and 104 create a second series circuit comprising the Vcc voltage source at input 105, closed switch 103, flying capacitor 106, closed switch 104 and tank capacitor 107. This circuit begins at input terminal 105 and ends at ground potential 110B. An electrical load 108 is coupled in parallel with tank capacitor 107 when coupled to terminal 109 and the electrical ground 210C.

At the beginning of the second half cycle of operation, the potential across capacitor 107 and load 108 equals two times Vcc (2*Vcc) (or near that level). The 2*Vcc voltage is the sum of the Vcc input voltage at input 105 added to the Vcc voltage to which capacitor 106 is charged during the first half cycle of operation of circuit 100. The 2*Vcc voltage at output terminal 109, or a voltage near that level, charges tank capacitor 107 toward the 2*Vcc voltage. However, charging tank capacitor 107 discharges the flying capacitor 106 thereby causing the 2*Vcc voltage at the output terminal to fall toward the Vcc voltage level which, by definition, is not adequate to turn ON the load 108. Nonetheless, the circuit builds the output voltage 109 toward the 2*Vcc level during subsequent full cycles of operation of circuit 100.

Load 108, a LED in the example employed herein, is turned ON when the output voltage 109 rises above the forward bias threshold voltage Vf of the LED. The tank capacitor is discharged when the LED turns ON and the circuit rapidly builds the output voltage back to the higher level needed to maintain the LED or other load type ON. Therefore, the LED, or other load type, remains ON.

With the prior art in mind, turn to the novel and improved combiner circuit 200 of Fig. 2. Circuit 200 includes two switches 201 and 202, one capacitor 206, a LED 208, the load 208, and a single diode 211. A switch can be used in lieu of the diode. The presently preferred embodiments are circuits that use a diode.

Circuit 200 employs a fist half cycle of operation wherein switch 201 is closed and switch 202 is open and employs a second half cycle of operation wherein switch 202 is closed and switch 201 is open.

During the first half cycle of operation of circuit 200, closed switch 201 creates a first series circuit including the Vcc2 voltage at the input terminal 212, diode 211, flying capacitor 206, closed switch 201 and ground potential 210A. Capacitor 206 is charged to the voltage level of the Vcc2 (or near Vcc2) voltage by the first series circuit. Input voltage Vcc2 is not adequate by itself to turn ON the LED because it is lower than the Vf threshold voltage level of the LED. Consequently, the LED is effectively an open circuit during the first half cycle of circuit operation. On the other hand, diode 211 is forward biased and thereby able to supply the Vcc2 charging voltage to the flying capacitor 206.

The voltages Vcc1 and Vcc2 are chosen such that the sum of Vcc1 plus (+) Vcc2 minus (-) Vdiode (the voltage drop across the diode) is greater than (>) Vf. Therefore, the forward biasing of LED 208 turns ON the LED or some type of electrical load.

During the second half cycle of operation of circuit 200, switch 202 creates a voltage adder circuit including the Vcc1 voltage at the input terminal 205, closed switch 202, the charged flying capacitor 206 and output terminal 209. Circuit 200 thereby creates a voltage at output terminal 209 equal to the sum of Vcc1 plus Vcc2 that is adequate to ON LED 208.

Flying capacitor 206 discharges through the LED to ground 210B while the LED is conducting causing the voltage level at output terminal 209 to fall below the forward bias voltage Vf turning the LED OFF. However, the combiner circuit during subsequent cycles of operation builds the voltage across the flying capacitor back toward the Vcc2 level to once again turn ON the LED. The discharging and recharging of the flying capacitor occurs during multiple full cycles of operation of circuit 200. As pointed out above, the frequency of the system operation is chosen so that the LED appears to emit light continuously.

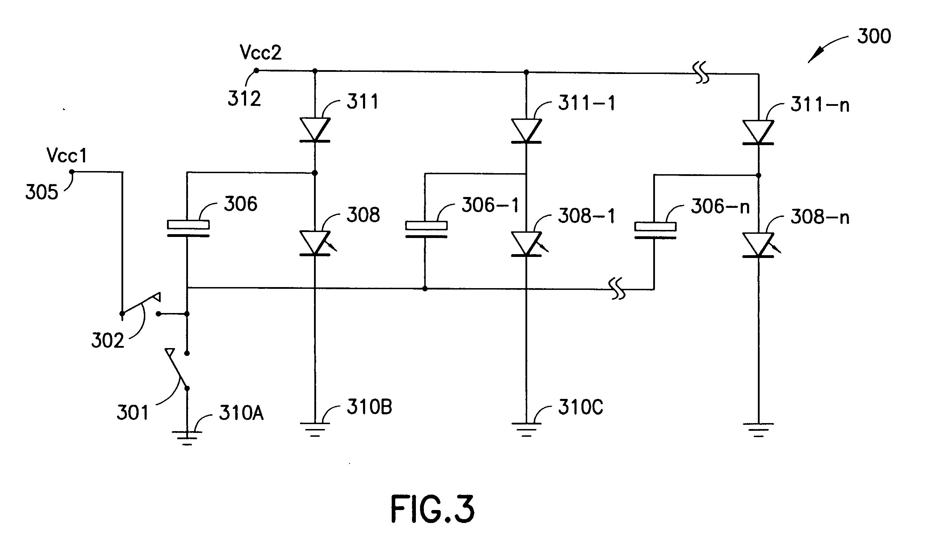

Circuit 300 of Fig. 3 is an embodiment wherein circuit 200 is coupled in parallel with multiple diodes 311-1 through 311-n, multiple flying capacitors 306-1 through 306-n and multiple loads 308-1 through 308-n. The load used in this embodiment, by way of example, is a LED, as it is in circuit 200. The multiple LEDs, capacitors and diodes are coupled to voltages Vcc1, Vcc2 and ground in the same manner as are the single set of components of circuit 200.

Those skilled in the art can devise various alternatives and modifications without departing from the substance of the combiner circuit embodiments disclosed combiner circuits. Accordingly, the present invention is intended to embrace all such alternatives, modifications and variances that fall within the scope of the appended claims.

## Claims

1. A method for boosting a first input voltage (Vcc1) from a voltage level below to a voltage level above a threshold voltage (Vf) required to turn ON an electrical load comprising, in combination, the steps of,
charging a flying capacitor during a first half cycle of circuit operation to the level of a second input voltage (Vcc2) through a diode coupled between the Vcc2 voltage and an output terminal for coupling to a load,
coupling the charged flying capacitor in series with the first input voltage Vcc1 during a second half cycle of circuit operation to create a voltage level of Vcc1 plus Vcc2 at the output terminal 209 to turn ON the load.

2. The method of claim 1 further including the step of selecting the voltage levels of Vcc1 and Vcc2 such that the sum of Vcc1 plus Vcc2 is greater than the threshold voltage Vf required to turn ON the load.

3. The method of claim 2 further including the step of selecting the voltage levels of Vcc1 and Vcc2 such that the sum of Vcc1 plus Vcc2 minus a voltage drop across a diode (Vdiode) coupled between Vcc2 and the load is greater than the threshold Vf required to turn ON the load.

4. The method of claim 1 further including the steps of adding one or more diodes, one or more flying capacitors and one or more electrical loads in parallel with the flying capacitor, diode and electrical load.

5. The method of claim 1 wherein the load is a LED.

6. A voltage combiner circuit for boosting a first input voltage (Vcc1), from a voltage level below, to a voltage level above a threshold voltage (Vf) required to turn ON an electrical load comprising, in combination, the elements of,
a first flying capacitor, during a first half cycle of circuit operation, coupled at a first capacitor node to ground to charge the flying capacitor to a second input voltage level (Vcc2) through a first diode (Vdiode) coupled to a second node of the first flying capacitor,
a first output terminal coupled to a node of the first diode and to the second node of the first flying capacitor for supplying a voltage to the load,
wherein, during a second half cycle of circuit operation, the first flying capacitor, charged to the Vcc2 voltage during the first half cycle of circuit operation, is coupled in series with the Vcc1 voltage providing a voltage to the output terminal that is the sum of the Vcc1 plus Vcc2 voltage that is able to turn ON a load having a threshold voltage Vf, when a load is coupled to the output terminal.

7. The voltage combiner circuit of claim 6 wherein the sum of voltage Vcc1 plus voltage Vcc2 exceeds the threshold voltage Vf of the load.

8. The voltage combiner circuit of claim 6 wherein the sum of voltage Vcc1 plus voltage Vcc2, minus a voltage drop across the diode (Vdiode) exceeds the threshold voltage Vf of a load.

9. The voltage combiner circuit of claim 6 further including a one or more diodes, one or more flying capacitors and one or more electrical loads are coupled in parallel with, respectively, the first flying capacitor, the first diode and an electrical load.

10. The voltage combiner circuit of claim 6 wherein one or more diode, one or more flying capacitor and one or more output terminals are coupled in parallel to the first flying capacitor, the first diode and the first output terminal, respectively.

11. The voltage combiner circuit of claim 6 further including a LED coupled to the output terminal.

12. The voltage combiner circuit of claim 7 further including an LED coupled to each of the multiple output terminals.
